# EUROPÄISCHE PATENTANMELDUNG

(11) **EP 0 908 655 A2**
(43) Veröffentlichungstag der Anmeldung: **14.04.1999**
(21) Anmeldenummer: 98117963.3
(22) Anmeldetag: 22.09.1998
(51) Int. Cl.: F16L 3/133

(54) **Vorrichtung zur Befestigung von Schlauchschellen**

(30) Priorität: 08.10.1997 DE 19744397
(71) Anmelder: Hans Oetiker AG Maschinen- und Apparatefabrik, 8812 Horgen (CH)
(72) Erfinder: Allert, Kurt, 78727 Oberndorf (DE)
(74) Vertreter: Grosse, Rainer, Dipl.-Ing.

(57) **Zusammenfassung**

Die Erfindung betrifft eine Vorrichtung zur Befestigung von Schlauchschellen. Es ist ein ein Blechteil (8) vorgesehen, das mittels mindestens zweier, beabstandet zueinanderliegender Abkantungen (6 ,7) drei Bereiche (19, 20, 21) aufweist, wobei ein zwischen den Abkantungen (6, 7) liegender erster Bereich (19) für den Durchgriff eines Spannbands (2) der Schlauchschelle (3) eine Ausnehmung (22, 23) aufweist, die im ersten Bereich (19) liegt oder sich über diesen hinaus bis in einen zweiten und/oder dritten Bereich (20, 21) erstreckt, wobei der zweite, der Innenseite (26) des Spannbands (2) zuordenbare Bereich (20) an eine der Abkantungen (6) und der dritte, der Außenseite (24) des Spannbands(2) zuordenbare Bereich (21) an die andere (7) der Abkantungen (6, 7) und wobei der dritte Bereich (21) an seiner dem Spannband (2) abgewandten Seite ein Vorrichtungs-Befestigungsmittel (33) aufweist.

## Beschreibung

Die Erfindung betrifft eine Vorrichtung zur Befestigung von Schlauchschellen.

Schlauchschellen dienen beispielsweise der Festlegung von in Schläuchen eingesteckten Bauteilen, wie Kupplungen oder dergleichen. Ferner lassen sich Schlauchschellen überall dort einsetzen, wo Radialkräfte auf einen Gegenstand aufgebracht werden sollen. Hierzu wird das Spannband der Schlauchschelle um den Gegenstand herumgelegt und mittels einer Spanneinrichtung festgezogen, d. h., der Schlaufendurchmesser wird durch das Festziehen verkleinert. Vorzugsweise weist die Schlauchschelle hierzu ein mit Schnecke versehenes Gehäuse auf, an dem ein Ende des Spannbandes festgelegt ist und das von dem anderen Ende des Spannbandes durchgriffen wird, wobei die Schnecke in Spannbandausnehmungen eingreift. Wird die Schnecke beispielsweise mittels eines Werkzeugs gedreht, so wird auf diese Art und Weise der Schlaufendurchmesser des Spannbandes verkleinert beziehungsweise -bei Drehrichtungsumkehrvergrößert.

Soll ein mit Schlauchschelle versehener Gegenstand festgelegt werden, beispielsweise ein mit Schlauchschelle versehener Schlauch in dem Motorraum eines Kraftfahrzeugs eine bestimmte Position erhalten, so ist es bisher bekannt, zusätzlich zur Schlaushschelle Befestigungsmittel zu verwenden. Diese Befestigungsmittel können beispielsweise aus Kunststoff hergestellte Kabelbinder sein, die den Schlauch und ein ortsfestes Bauteil, beispielsweise eine Stützstrebe oder dergleichen umschlingen, so daß auf diese Art und Weise der Schlauch festgelegt wird. Diese Maßnahme ist aufgrund des zusätzlichen Befestigungsmittels nicht nur aufwendig, sondern birgt auch die Gefahr in sich, daß beispielsweise durch Vibrationen der Schlauch im Festlegungsbereich einem Reibverschleiß unterliegt, sofern der Kabelbinder nicht hinreichend stramm angezogen ist. Eine recht stramme Festlegung mittels Kabelbinder birgt andererseits jedoch die Gefahr in sich, daß der Schlauch durch die Kerbwirkung des Kabelbinders beschädigt wird.

Der Erfindung liegt daher die Aufgabe zugrunde, eine einfache und kostengünstige Möglichkeit der Befestigung von Schlauchschellen zu schaffen.

Hierzu ist erfindungsgemäß ein Blechteil vorgesehen, das mittels mindestens zweier, beabstandet zueinander liegender Abkantungen drei Bereiche aufweist, wovon ein zwischen den Abkantungen liegender erster Bereich für den Durchgriff des Spannbands der Schlauchschelle eine Ausnehmung aufweist, die im ersten Bereich liegt oder sich über diesen hinaus bis in einen zweiten und/oder dritten Bereich erstreckt, wobei der zweite, der Innenseite des Schlauchbandes zuordenbare Bereich an eine der Abkantungen und der dritte, der Außenseite des Spannbands zuordenbare Bereich an der anderen der Abkantungen anschließt, und wobei der dritte Bereich an seiner dem Spannband abgewandten Seite ein Vorrichtungs-Befestigungsmittel aufweist. Durch die Verwendung eines Blechteils, das lediglich Zwei Abkantungen und eine Ausnehmung aufweist, ist ein extrem einfaches und preiswertes Bauteil geschaffen, das direkt der Schlauchschelle zugeordnet wird. Diese direkte Zuordnung erfolgt dadurch, daß durch die Ausnehmung das Spannband der Schlauchschelle hindurch geführt wird, so daß durch das Anziehen der Schlauchschelle nicht nur der betreffende Gegenstand radial gespannt wird, sondern gleichzeitig dessen Festlegung an der Befestigungsvorrichtung erfolgt. Mithin bestimmt das Anziehmoment der Schlauchschelle nicht nur die Radialkraft auf den Gegenstand, sondern gleichzeitig die Festlegung der Schlauchschelle am Blechteil. Durch die beiden, beabstandet zueinander liegender Abkantungen sind der zweite und der dritte Bereich geschaffen, wobei sich der zweite Bereich auf der Innenseite des Spannbandes befindet. Da er einen Teil des Blechteils darstellt, also flächig ausgestaltet ist, schmiegt er sich problemlos an die Innenseite des Spannbandes an und ist daher in der Lage, auch in diesem Bereich die Radialkräfte des Spannbands optimal zum zu spannenden Gegenstand zu übertragen, d. h., die Klemmwirkung des Schlauchschellenbandes wird durch die Befestigungsvorrichtung nicht störend beeinflußt. Der dritte Bereich, der auf der Außenseite des Spannbandes liegt, eignet sich in hervorragender Weise für die Anordnung eines Vorrichtungs-Befestigungsmittels, das - nach Wunsch des Fachmannes - ausgewählt werden kann. So ist es beispielsweise möglich, dort eine Mutter festzulegen oder eine Gewindestange oder aber auch andere aus der Befestigungstechnik bekannte Mittel, die es erlauben, die Vorrichtung an einer gewünschten Stelle, beispielsweise an der zuvor erwähnten Strebe des Motorraums des Kraftfahrzeugs festzulegen. Im Falle einer Mutter kann diese Festlegung beispielsweise durch eine Gewindeschraube erfolgen, die durch eine Durchgangsbohrung der Strebe hindurch gesteckt und dann in die Mutter der Vorrichtung eingeschraubt wird.

Nach einer Weiterbildung der Erfindung ist vorgesehen, daß das Blechteil mittels weiterer Abkantungen einen U-förmigen Abschnitt aufweist, dessen Schenkel jeweils eine Ausnehmung für den Querschnitt des Spannbandes besitzen, wobei der die Schenkel verbindende Steg des U's der Außenseite des Spannbandes zuordenbar ist. Durch die in den beiden Schenkeln liegenden Ausnehmungen wird das Spannband somit an zwei Stellen festgelegt, die - in Umfangsrichtung des Spannbands betrachtet - beabstandet voneinander liegen, wodurch ein besonders fester Halt erzielt wird.

Es ist vorteilhaft, wenn von den Enden der beiden Schenkel des U's jeweils ein Fortsatz vorzugsweise nach außen abgebogen ist. Der jeweilige Fortsatz ist vergleichbar mit dem vorstehend erwähnten zweiten Bereich, d. h., er bewirkt jeweils die Abstützung an der Innenseite des Spannbandes der Schlauchschelle, wodurch die Vorrichtung am Spannband festgelegt wird und führt andererseits aufgrund seiner flächigen Gestalt jedoch nicht zu Spannproblemen.

Ferner ist es vorteilhaft, wenn die Ausnehmung beziehungsweise die Ausnehmungen als geschlossen umrandeter Durchbruch beziehungsweise geschlossen umrandete Durchbrüche ausgebildet ist/sind. Diese Ausgestaltung hält die Vorrichtung unverlierbar an dem Spannband, sobald dieses durch die Ausnehmung gesteckt ist. Alternativ ist es jedoch auch möglich, daß die Ausnehmung beziehungsweise die Ausnehmungen als randoffene Ausnehmung beziehungsweise randoffene Ausnehmungen ausgebildet ist/sind. In einem solchen Falle läßt sich die Befestigungsvorrichtung sehr einfach der Schlauchschelle zuführen, selbst wenn diese bereits um den zu spannenden Gegenstand herumgelegt, jedoch noch nicht festgezogen ist. Aufgrund der randoffenen Ausnehmung ist dann ein seitliches Heranführen der Vorrichtung möglich, wodurch das Spannband durch den randoffenen Schlitz der Ausnehmung in die Ausnehmung eintreten kann.

Schließlich ist die Ausbildung der Befestigungsvorrichtung als Stanzprägeteil vorgesehen, so daß vorzugsweise mittels eines einzigen Arbeitsschrittes die Herstellung erfolgen kann, d. h., die Vorrichtung wird im Zuge des Arbeitsschrittes sowohl einer Blechpartie ausgestanzt und gleichzeitig geprägt, so daß die Abkantungen entstehen.

Das Vorrichtungs-Befestigungsmittel kann als am dritten Bereich befestigte Mutter oder dort mit ihrem Kopf befestigte Schraube oder aber auch als dort befestigter Gewindebolzen ausgebildet sein. Die Befestigung kann beispielsweise durch Schweißung, Lötung oder auch mittels Umformungsvorgängen erfolgen.

Die Zeichnungen veranschaulichen die Erfindung anhand von Ausführungsbeispielen und zwar zeigt:
- Figur 1: eine perspektivische Ansicht einer Vorrichtung zum Festlegen einer Schlauchschelle,
- Figur 2: verschiedene Ansichten eines weiteren Ausführungsbeispiels der Vorrichtung,
- Figur 3: ein weiteres Ausführungsbeispiel der Vorrichtung in verschiedenen Ansichten,
- Figur 4: ein weiteres Ausführungsbeispiel der Vorrichtung in verschiedenen Ansichten und
- Figur 5: ein letztes Ausführungsbeispiel der Vorrichtung in verschiedenen Ansichten.

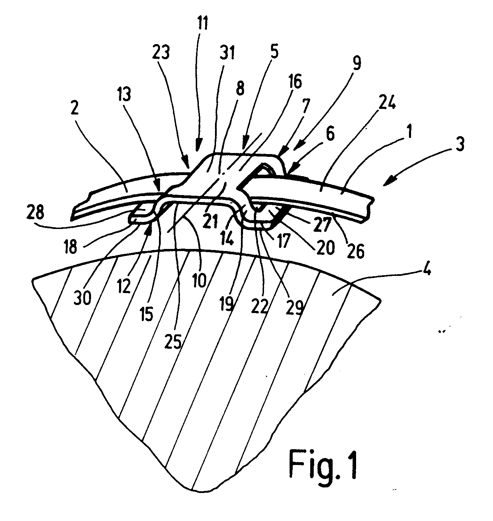

Die Figur 1 zeigt einen Abschnitt 1 eines Spannbandes 2 einer nicht näher dargestellten Schlauchschelle 3. Die Schlauchschelle ist um einen, in der Figur 1 nur bereichsweise dargestellten Gegenstand 4 herumgeführt, jedoch noch nicht festgezogen. Auf das Spannband 2 ist eine Vorrichtung 5 zur Befestigung der Schlauchschelle 3 aufgeschoben. Die Vorrichtung 5 weist eine erste Abkantung 6 und eine weitere, zweite Abkantung 7 eines Blechteils 8 auf, wodurch ein abgekröpfter Bereich 9 geschaffen ist. Dieser abgekröpfte Bereich 9 wiederholt sich - spiegelbildlich zur Quermittellinie 10, d. h., dort liegt eine weitere Abkröpfung 11 des Blechteils 8 vor, die von einer dritten Abkantung 12 und einer vierten Abkantung 13 geschaffen ist. Auf diese Art und Weise wird ein U-förmiger Abschnitt gebildet, der Schenkel 14, 15 und einen Steg 16 aufweist. Von den Enden der Schenkel 14 und 15 gehen Fortsätze 17 und 18 aus, die nach außen, also vom U wegragen. Die gesamte Vorrichtung 5 ist einstückig ausgebildet, d. h., durch die beiden Abkantungen 6 und 7 ist ein erster Bereich 19 geschaffen, der den Schenkel 14 darstellt, wobei sich einstückig daran - am Anschluß an die Abkantung 6 - ein zweiter Bereich 20 anschließt, der den Fortsatz 17 repräsentiert. Auf seiner anderen, an die Abkantung 7 angrenzenden Seite geht der erste Bereich in einen dritten Bereich 21 über, der den Steg 16 des U's bildet. Entsprechende Verhältnisse liegen jenseits der Quermittellinie 10 vor, d. h., die Vorrichtung ist - wie bereits angedeutet - symmetrisch zur Quermittellinie 10 ausgebildet.

Der Figur 1 ist zu entnehmen, daß der erste Bereich 19 von einer Ausnehmung 22 durchsetzt wird. Die Ausnehmung 22 weist eine Breite auf, die etwas größer als die Breite des Spannbandes 2 ist. Die Höhe der Ausnehmung 22 ist vorzugsweise derart groß gewählt, daß sie sich bis in den zweiten und dritten Bereich 20, 21 hinein erstreckt, d. h., die Abkantungen 6 und 7 liegen innerhalb der von der Ausnehmung 22 überspannten Zone.

Ebenso wie der Schenkel 14 die Ausnehmung 22 aufweist, ist auch der Schenkel 15 mit einer entsprechenden Ausnehmung 23 versehen, so daß im Detail hierauf nicht eingegangen werden muß. Es gelten in entsprechender Weise die vorstehenden Ausführungen.

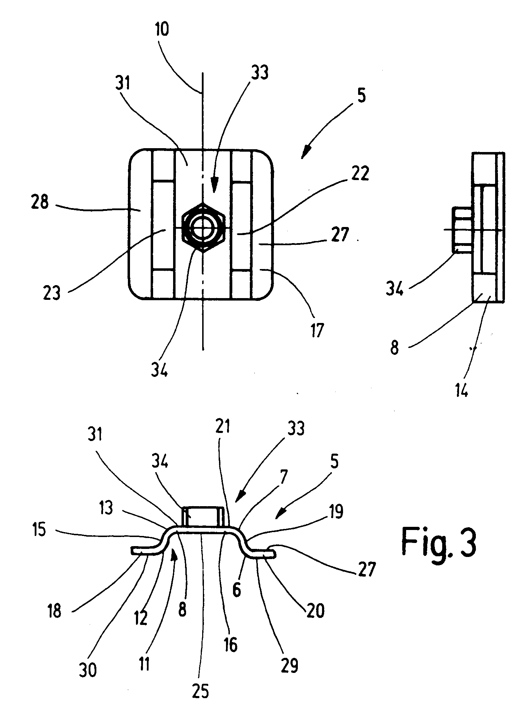

Es ergibt sich folgende Funktion: Soll die Vorrichtung 5 der Schlauchschelle 3 zugeordnet werden, so ist es zunächst erforderlich, das Spannband 2 durch die beiden Ausnehmungen 22 und 23 hindurchzuführen, so wie dies aus der Figur 1 hervorgeht. Ist dies erfolgt, so liegt die Außenseite 24 der Innenseite 25 des Stegs 16 gegenüber. Die Innenseite 16 des Spannbands 2 liegt den Außenseiten 27, 28 der Fortsätze 17 und 18 gegenüber. Wird nun die Schlauchschelle 3 mittels einer nicht dargestellten Spannvorrichtung festgezogen, so daß sie den Gegenstand 4 fest umschlingt, so wird dabei gleichzeitig die Vorrichtung 5 festgelegt, wobei diese sich mit ihren Innenseiten 29 und 30 der Fortsätze 17 und 18 an den Gegenstand 4 abstützt und ferner die Innenseite 26 des Spannbands 2 auf den Außenseiten 27 und 28 der Fortsätze 17 und 18 aufliegt. Mit seiner Außenseite 31 läßt sich der Steg 16 beziehungsweise der dritte Bereich 21 an einem nicht dargestellten Bauteil festlegen, was beispielsweise mittels Klebung erfolgen kann oder aber auch auf andere Art und Weise möglich ist, wie dies näher in den Ausführungsbeispielen der Figur 3 bis 5 dargelegt ist. Hierauf wird nachstehend näher eingegangen.

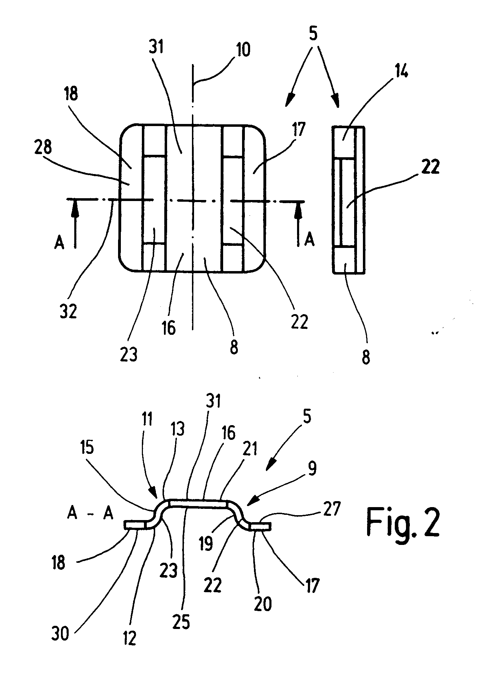

Die Figur 2 verdeutlicht nochmals die Vorrichtung 5 gemäß Figur 1 wobei jedoch - der Übersichtlichkeit halber - das Spannband 2 der Schlauchschelle 3 nicht dargestellt ist. Es ist erkennbar, daß nicht nur eine Symmetrie zur Quermittellinie 10, sondern auch zur Längsmittellinie 32 besteht. Der Schnitt entlang der Linie A-A verdeutlicht, daß sich die beiden Ausnehmungen 22 und 23 bis über die jeweils zugeordneten Abkantungen 6 und 7 beziehungsweise 12 und 13 hinaus erstrecken, so daß beim durch die Ausnehmungen 22 und 23 geführten Spannband 2 ein flächiges Aufliegen der Innenseite 26 des Spannbandes 2 auf den Fortsätzen 17 und 18 garantiert ist.

Die Figur 3 verdeutlicht ein Ausführungsbeispiel der Erfindung, das ebenso wie das Ausführungsbeispiel der Figuren 1 und 2 aufgebaut ist, so daß nachstehend nur noch auf die Unterschiede eingegangen werden soll. Diese bestehen darin, daß auf der Außenseite 31 des Stegs 16 ein Vorrichtungs-Befestigungsmittel 33 angeordnet ist, das von einer Mutter 34 gebildet wird. Die Stirnseite der Mutter 34 ist auf die Außenseite 31 des Stegs 16 aufgeschweißt, so daß die Möglichkeit besteht, die Vorrichtung 5 mittels einer Gewindeschraube, die in die Mutter 34 eingeschraubt wird, an einem beliebigen Gegenstand festzulegen. Vorzugsweise durchgreift die Gewindeschraube dabei eine Durchgangsbohrung dieses Gegenstands.

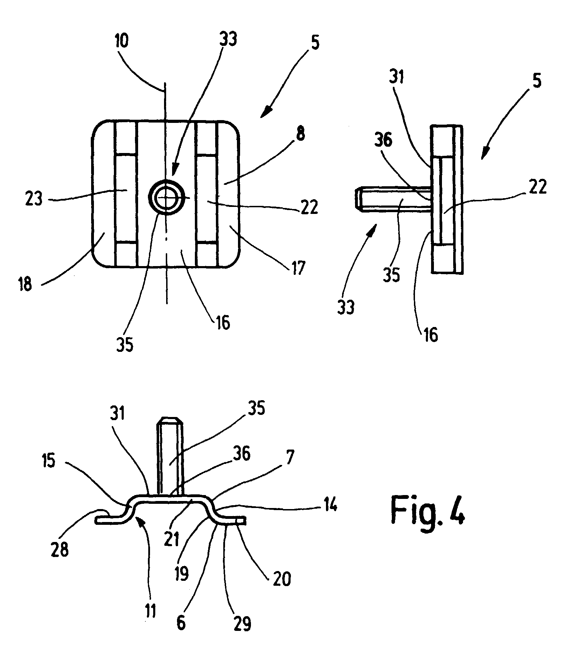

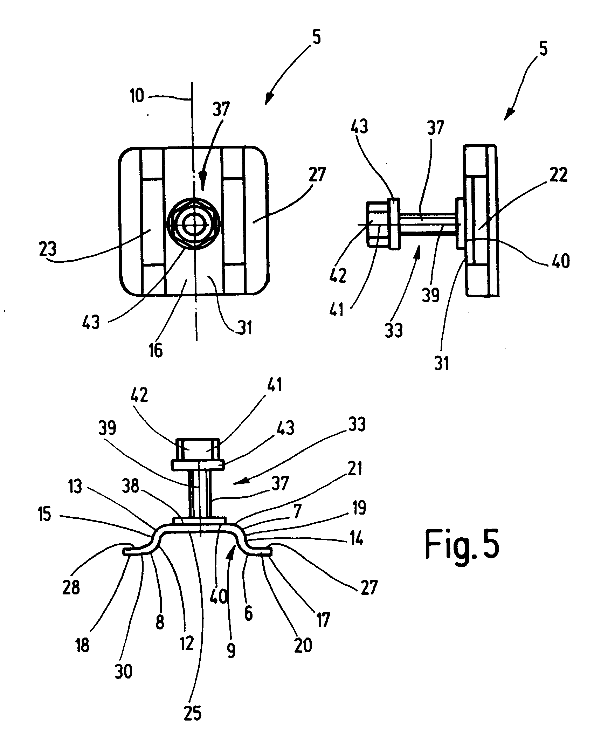

Auch die Ausführungsbeispiele der Figuren 4 und 5 zeigen Vorrichtungen 5, die entsprechend der Figuren 1 und 2 ausgebildet sind, sich jedoch im Hinblick auf die Vorrichtungs-Befestigungsmittel 33 unterscheiden. Beim Ausführungsbeispiel der Figur 4 ist das Vorrichtungs-Befestigungsmittel als Gewindestange 35 ausgebildet, dessen Stirnseite 36 auf der Außenseite 31 des Stegs 16 beispielsweise durch Schweißung befestigt ist. Für die Festlegung der Vorrichtung 5 ist es daher möglich, die Gewindestange 35 durch ein Durchgangsloch eines Gegenstands zu führen und auf die Gewindestange 35 eine Mutter aufzuschrauben.

Beim Gegenstand der Figur 5 handelt es sich um ein Vorrichtungs-Befestigungsmittel 33, das als Gewindeschraube 37 ausgebildet ist, die einen Kopf 38 und einen Schaft 39 aufweist. Die Stirnseite 40 des Kopfs 38 ist auf der Außenseite 31 des Stegs 16 beispielsweise mittels Schweißung festgelegt. Auf das Gewinde des Schaftes 39 ist eine vorzugsweise aus Kunststoff bestehende Mutter 41 aufgeschraubt, die vorzugsweise als Kragenmutter 42 ausgebildet sein kann, d. h., sie besitzt auf einer Seite einen Stützkragen 43. Insbesondere ist vorgesehen, daß das Gewinde des Schaftes 39 sich in die Mutter 41 beim Aufschrauben einschneidet, d. h., die Mutter 41 besitzt keines oder nur ein grob vorgearbeitetes Gewinde, so daß keine Sicherungsmittel gegen Losdrehen der Mutter 41 vorgesehen sein müssen.

Nach nicht dargestellten Ausführungsbeispielen ist es auch möglich, das Vorrichtungs-Befestigungsmittel am Steg 16 durch Press- oder Bördelverfahren anzubringen. So ist es beispielsweise auch möglich, einen Gewindebolzen dort einzupressen. Sofern die Gewindeschraube 37 gemäß Figur 5 am Steg 16 durch Einpressen befestigt wird, kann dies derart erfolgen, daß der Kopf 38 die Außenseite 31 des Stegs 16 nicht überragt, somit eine großflächige Anlage an einem zu befestigenden Gegenstand erzielt ist.

## Patentansprüche

1. Vorrichtung zur Befestigung von Schlauchschellen, **gekennzeichnet durch** ein Blechteil (8), das mittels mindestens zweier, beabstandet zueinanderliegender Abkantungen (6, 7) drei Bereiche (19, 20, 21) aufweist, wobei ein zwischen den Abkantungen (6, 7) liegender erster Bereich (19) für den Durchgriff eines Spannbands (2) der Schlauchschelle (3) eine Ausnehmung (22, 23) aufweist, die im ersten Bereich (19) liegt oder sich über diesen hinaus bis in einen zweiten und/oder dritten Bereich (20, 21) erstreckt, wobei der zweite, der Innenseite (26) des Spannbands (2) zuordenbare Bereich (20) an eine der Abkantungen (6) und der dritte, der Außenseite (24) des Spannbands(2) zuordenbare Bereich (21) an die andere (7) der Abkantungen (6, 7) anschließt und wobei der dritte Bereich (21) an seiner dem Spannband (2) abgewandten Seite ein Vorrichtungs-Befestigungsmittel (33) aufweist.

2. Vorrichtung nach Anspruch 1, **dadurch gekennzeichnet**, daß das Blechteil (8) mittels weiterer Abkantungen (12, 13) einen U-förmigen Abschnitt aufweist, dessen Schenkel (14, 15) jeweils eine Ausnehmung (22, 23) für den Durchgriff des Spannbands (2) besitzen, wobei der die Schenkel (14, 15) verbindende Steg (16) des U's der Außenseite (24) des Spannbands (2) zuordenbar ist.

3. Vorrichtung nach einem der vorhergehenden Ansprüche, **dadurch gekennzeichnet**, daß von den Enden der beiden Schenkel (14, 15) des U's jeweils ein Fortsatz (17, 18) vorzugsweise nach außen abgebogen ist.

4. Vorrichtung nach einem der vorhergehenden Ansprüche, **dadurch gekennzeichnet**, daß die Ausnehmung (22) beziehungsweise die Ausnehmungen (22, 23) als geschlossen umrandeter Durchbruch beziehungsweise geschlossen umrandete Durchbrüche ausgebildet ist/sind.

5. Vorrichtung nach einem der vorhergehenden Ansprüche, **dadurch gekennzeichnet**, daß die Ausnehmung (22) beziehungsweise die Ausnehmungen (22, 23) als randoffene Ausnehmung beziehungsweise randoffene Ausnehmungen ausgebildet ist/sind.

6. Vorrichtung nach einem der vorhergehenden Ansprüche, **gekennzeichnet durch** die Ausbildung als Stanzprägeteil.

7. Vorrichtung nach einem der vorhergehenden Ansprüche, **dadurch gekennzeichnet**, daß das Vorrichtungs-Befestigungsmittel (33) als durch Klebung, Pressung, Schweißung, Bördelung oder dergleichen befestigte Mutter (34), Gewindestange (35) oder Gewindeschraube (37) ausgebildet ist.
